# EUROPÄISCHE PATENTSCHRIFT

(11) **EP 3 365 636 B1**
(45) Veröffentlichungstag und Bekanntmachung des Hinweises auf die Patenterteilung: **27.10.2021**
(21) Anmeldenummer: 16762823.9
(22) Anmeldetag: 08.09.2016
(51) Int. Cl.: G01F 1/684

(54) **THERMISCHES DURCHFLUSSMESSGERÄT UND EIN VERFAHREN ZUR HERSTELLUNG EINES THERMISCHEN DURCHFLUSSMESSGERÄTES**
THERMAL FLOW METER AND METHOD FOR PRODUCING A THERMAL FLOW METER
DÉBITMÈTRE THERMIQUE ET PROCÉDÉ DE FABRICATION D'UN DÉBITMÈTRE THERMIQUE

(30) Priorität: 23.10.2015 DE 102015118126
(43) Veröffentlichungstag der Anmeldung: 29.08.2018
(73) Patentinhaber: Endress+Hauser Flowtec AG, 4153 Reinach (CH)
(72) Erfinder: SCHULTHEIS, Hanno, 79539 Lörrach (DE); GRÜN, Alexander, 79539 Lörrach (DE); PFAU, Axel, 79664 Wehr (DE)
(74) Vertreter: Andres, Angelika Maria
(86) Internationale Anmeldenummer: PCT/EP2016/071204
(87) Internationale Veröffentlichungsnummer: WO 2017/067701

(56) Entgegenhaltungen:
- DE-A1-102012 109 237
- DE-A1-102013 108 099
- US-A1- 2002 100 320

## Beschreibung

Die vorliegende Erfindung betrifft ein thermisches Durchflussmessgerät nach dem Oberbegriff des Anspruchs 1 und eine Anordnung mit einem Rohr und dem thermischen Durchflussmessgerät.

Es sind thermische Durchflussmessgeräte bekannt, welche Sensorgehäuse mit zwei Stifthülsen aufweisen. In einer ersten dieser zwei Stifthülsen ist ein Heizer, z.B. ein beheiztes Widerstandsthermometer, angeordnet. In einer zweiten dieser Stifthülsen ist ein Temperatursensor zur Ermittlung der Mediumstemperatur angeordnet, welcher ebenfalls als beheizbares Widerstandsthermometer ausgebildet sein kann, welches allerdings in seinem Betriebszustand als Temperatursensor nicht aktiv beheizt wird. Mittels dieser beiden vorbeschriebenen Sensorelemente kann eine zuverlässige Durchflussmessung erfolgen.

Ein thermisches Durchflussmessgerät ist zudem aus der DE 10 2013 108 099 A1 bekannt. Hier wird eine strömungsoptimierte Geometrie beschrieben, welche aufgrund von vorgegebenen Rezirkulationsbereichen und anliegenden Grenzschichten eine besonders genaue Durchflussmessung ermöglicht.

DE 10 2012 109 237 A1 offenbart ein weiteres Beispiel eines Durchflussmessgerätes gemäß dem Stand der Technik.

Ausgehend vom vorgenannten Stand der Technik ist es nunmehr Aufgabe der vorliegenden Erfindung ein thermisches Durchflussmessgerät bereitzustellen, in welchem zusätzlich zur Durchflussmessung eine weitere Funktionalität in strömungsoptimierter Weise ergänzt ist.

Die vorliegende Erfindung löst diese Aufgabe durch ein thermisches Durchflussmessgerät mit den Merkmalen des Anspruchs 1.

Ein erfindungsgemäßes thermisches Durchflussmessgerät umfasst einen Sensor mit einem Sensorgehäuse, welches vorzugsweise metallisch ausgebildet ist.

Das Sensorgehäuse ist vorzugsweise zum Anschluss an eine Einsteckvorrichtung und/oder eine Rohrwandung geeignet. Eine Einsteckvorrichtung kann z.B. ein Gestänge sein, an dessen Ende das vorgenannte Sensorgehäuse angeordnet ist. Dieses Gestänge wird sodann durch eine Öffnung, die zumeist im Schwerefeld am obersten Punkt eines Rohres angeordnet ist, in das Rohr eingeführt. Die zur Umwelt begrenzende Wandung des Sensorgehäuses ist somit teilweise oder vollständig einer im Rohr befindlichen Strömung eines Messmediums ausgesetzt. Alternativ zur Einsteckvorrichtung kann das metallische Sensorgehäuse auch direkt oder mittels einer Rohrverlängerung fest an einer Rohrwandung fixiert sein. Die Art der Festlegung des Sensorgehäuses bzw. des Hohlkörpers ist im Rahmen der vorliegenden Erfindung jedoch nur von nachrangiger Bedeutung.

Das Sensorgehäuse weist eine Kappe auf. Das Sensorgehäuse weist zudem zumindest zwei Stifthülsen auf. Besonders bevorzugt können die Stifthülsen auch der Kappe zugeordnet sein, also Teil der Kappe sein.

Die Kappe weist eine Stirnfläche auf, welche sind in mehrere segmentartige Flächen unterteilt. Dabei umfasst die Stirnfläche zumindest eine Grundfläche. Diese Grundfläche kann beispielsweise eben oder gewölbt ausgebildet sein.

Das Sensorgehäuse die zumindest zwei Stifthülsen stehen ausgehend von der Grundfläche hervor und ragen im eingebauten Zustand vorzugsweise in den Innenbereich eines Rohres hinein. Die Stifthülsen können z.B. zylindrisch oder prismatisch ausgebildet sein.

In der ersten Stifthülse, insbesondere in einem endständigen Abschnitt dieser Stifthülse, ist ein erster Heizer angeordnet und in der zweiten Stifthülse, insbesondere in einem endständigen Abschnitt dieser Stifthülse, ist ein Temperatursensor zur Ermittlung der Mediumstemperatur angeordnet.

Erfindungsgemäß weist die Stirnfläche der Kappe eine zweite Fläche auf, welche gegenüber der Grundfläche um einen bestimmten Winkel geneigt ist und welche eben ausgebildet ist. An dieser Grundfläche ist ein zweiter Heizer angebracht. Dieser kann zur Detektion eines Sensordrifts oder in Kombination mit einem optionalen dritten Heizer zur Richtungserkennung genutzt werden.

Dadurch sind zusätzlich zur Durchflussmessungen eine oder mehrere weitere Funktionalitäten in einer strömungsoptimierten Geometrie eines Sensorgehäuses integriert oder realisierbar. In dieser Geometrie behindern sich die beiden Heizer nur in sehr geringem Maße.

Vorteilhafte Eigenschaften sind Gegenstand der Unteransprüche.

Es ist insbesondere für die Richtungserkennung von Vorteil, wenn die Stirnfläche der Kappe zumindest eine zweite gegenüber dieser Grundfläche um einen Winkel geneigte ebene Fläche unterteilt ist, wobei an einer Innenwandung der Kappe im Bereich dieser zweiten Fläche ein dritter Heizer angeordnet ist.

Es ist von Vorteil, wenn das Sensorgehäuse eine Längsachse aufweist und eine erste Schnittebene, auf welcher diese Längsachse angeordnet ist, aufweist, wobei die Kappe spiegelsymmetrisch aufgebaut ist mit einer ersten Symmetrieebene, welche deckungsgleich zur ersten Schnittebene ist. Dadurch kann ein bidirektionales Anströmen ermöglicht werden.

Das Sensorgehäuse weist vorteilhaft eine zweite Schnittebene auf bzw. definiert eine solche zweite Schnittebene, auf welcher diese Längsachse des Sensorgehäuses angeordnet ist. Die Kappe ist vorteilhaft spiegelsymmetrisch aufgebaut mit einer zweiten Symmetrieebene, welche deckungsgleich zur vorgenannten zweiten Schnittebene ist, wobei vorzugsweise die erste und die zweite Schnittebenen senkrecht zueinander angeordnet sind.

Das Durchflussmessgerät bedarf u.a. im Falle eines symmetrischen Aufbaus zur sogenannten bidirektionalen Durchflussmessung lediglich einer Kalibration aus einer Strömungsrichtung.

Das Sensorgehäuse weist vorteilhaft eine Schnittebene auf, welche senkrecht zur Längsachse des Sensorgehäuses angeordnet ist bzw. definiert eine solche Schnittebene. Der Winkel der ersten und/oder zweiten geneigten Fläche ist vorzugsweise mehr als 5°, besonders bevorzugt 10°-70°, ganz besonders bevorzugt 35-55°, zu dieser Schnittebene geneigt.

Um einen möglichst direkten Wärmeübergang zu erreichen ist es von Vorteil, wenn die Kappe zumindest im Bereich der ersten und/oder der zweiten Fläche eine Wandstärke von weniger als 0,5 mm aufweist.

Das thermische Durchflussmessgerät kann vorteilhaft eine Auswerteeinheit aufweisen, welche ausgerüstet ist zur Erkennung eines Sensordrifts anhand von an dem zweiten und/oder dritten Heizer ermittelten leistungsproportionalen Messwerten. Die Auswerteeinheit kann z.B. eine Speichereinheit mit einer Datenbank und eine Recheneinheit umfassen. Im Falle eines Sensordrifts sollte die Differenz der Leistungskoeffizienten zwischen dem ersten Heizer und einem der zweiten und/oder dritten Heizer einen vorgegebenen Sollwert überschreiten. Dann kann eine Anzeige, dass ein Sensordrift vorliegt, erfolgen. Vergleichsalgorithmen sind ebenfalls bei der Richtungserkennung anzuwenden, wobei hier die Messwerte des zweiten als auch des dritten Heizers berücksichtigt werden.

Weitere vorteilhafte Ausgestaltungen eines Sensorgehäuses für ein thermisches Durchflussmessgerät sind nachfolgend genannt.

Zur Strömungsführung kann das Sensorgehäuse, insbesondere die Kappe, einen Bügel aufweisen, welcher die Stifthülsen überspannt bzw. einrahmt. Dadurch wird eine verringerte Drehwinkelempfindlichkeit des Durchflussmessgerätes erreicht.

Eine weitere vorteilhafte Anordnung umfasst ein thermisches Durchflussmessgerät nach einem der vorhergehenden Ansprüche und ein Rohr, welches von einem Messmedium in einer ersten Strömungsrichtung durchflossen wird, wobei das Sensorgehäuse des thermischen Durchflussmessgerätes im Rohr angeordnet ist und wobei das thermische Durchflussmessgerät eine Auswerteeinrichtung aufweist, welche ausgerüstet ist zum Erfassen des Durchfluss des Messmediums in der ersten Strömungsrichtung und in einer der ersten Strömungsrichtung entgegengesetzten zweiten Strömungsrichtung anhand der Messwerte, z.B. der Leistungskoeffizieten, des zweiten und des dritten Heizers. Die Auswerteeinheit kann z.B. aus einer Recheneinheit mit entsprechenden Sollwertvorgaben bestehen.

Die jeweilige Stifthülse kann vorteilhaft einen weiteren Abschnitt aufweisen, welcher vorzugsweise in die Grundfläche übergeht, mit einer Mantelfläche die einen maximalen Abstand zur Längsachse d2 aufweist. Bei einer kegelstumpfförmigen Mantelfläche entspricht der maximale Abstand dem größten Radius der Mantelfläche, welcher üblicherweise zugleich die fiktive Grundfläche des Kegelstumpfes bildet. Diese Grundfläche ist selbstverständlich nicht existent, da die Hülse des Sensorgehäuses als durchgehend hohl zu verstehen ist, so dass ein Temperatursensor bei der Montage des thermischen Durchflussmessgerätes über den Hohlkörper und eine endständige Öffnung der Stifthülse in diese Stifthülse einführbar und bis in den ersten Abschnitt durchführbar ist bzw. eingefädelt werden kann. Diese gestufte Anordnung ermöglicht eine geringere Vibrationsempfindlichkeit der Stifthülsen.

Damit die einzelnen Sensorelemente besonders gut thermisch entkoppelt sind und auch nur geringe Strömungsverwirbelungen erzeugen, ist es von Vorteil, wenn der maximale Innendurchmesser des ersten Abschnitts kleiner oder gleich 4 mm, vorzugsweise kleiner oder gleich 3 mm, ist.

Es ist von Vorteil, wenn jede der Stifthülsen zumindest in dem endständigen Abschnitt eine Wandstärke von weniger als 0,5 mm, vorzugsweise zwischen 0,1-0,4 mm, aufweist. Die geringe Wandstärke ermöglicht eine sehr direkte und schnelle Wärmeübertragung an das Messmedium. Dadurch werden schnelle Ansprechzeiten des Sensors bei Änderung der Strömungsgeschwindigkeit des Messmediums ermöglicht, allerdings senkt sich bei dünnen Stifthülsen auch zusätzlich die Eigenfrequenz der Stifthülse und des Sensorgehäuses insgesamt. Dies kann durch die gestufte Form der erfindungsgemäßen Stifthülse jedoch vorteilhaft kompensiert werden.

In diesem Kontext ist es von Vorteil, wenn die Stifthülse aus mehreren Abschnitten besteht, so z.B. einem ersten endständigen Abschnitt in welchem der Heizer oder der Temperatursensor zur Ermittlung der Mediumstemperatur angeordnet ist.

Der erste Abschnitt kann vorteilhaft als eine zylindrische und/oder konische bzw. kegelförmige Mantelfläche aufweisen. Die Anbindung des Heizers kann bevorzugt durch eine Kupferbrücke erfolgen, wie dies beispielsweise DE 10 2008 015 359 A1 beschrieben wird.

Es kann zudem ein weiterer Abschnitt der Stifthülse vorgesehen sein. Dieser weitere Abschnitt der Stifthülse kann eine kegelstumpfförmige Mantelfläche aufweisen. Durch die kegelförmige Ausgestaltung des zum Hohlkörper hin angeordneten Abschnitts wird zusätzlich die Eigenfrequenz der Stifthülse erhöht

Die Wandstärke der Kappe variiert in den unterschiedlichen Bereichen, so z.B. der Stirnfläche, den Flächen mit den zweiten und drittem Heizer und den Stifthülsen um weniger als 0,1 mm, vorzugsweise um weniger als 0,05 mm. Dadurch wird eine möglichst gleichmäßige Wärmeverteilung erreicht.

Für eine Druckstabilität und chemische Stabilität ist es von Vorteil, wenn das Sensorgehäuse aus Stahl, Hastelloy und/oder Titan besteht.

Die Kappe kann einstückig ausgebildet sein und die Stifthülsen können mit der Stirnfläche der Kappe nahtfrei, insbesondere schweißnahtfrei, miteinander verbunden sein. Nahtfrei bedeutet im Kontext der vorliegenden Erfindung, dass weder eine Schweißnaht noch eine Klebe- oder Lötnaht als Verbindung zwischen den Stifthülsen und dem Hohlkörper vorhanden ist. Bei verschweißten Stifthülsen ändern sich die Wärmeübergänge mit der Temperatur, was bei einem größeren Temperaturwechsel zu einem Messfehler führen kann, dies wird bei dieser Ausführungsvariante jedoch vorteilhaft vermieden.

Es ist insbesondere von Vorteil, wenn das metallische Sensorgehäuse als ein monolithisches Bauteil ausgebildet ist. Das bedeutet, dass das Sensorgehäuse aus komplett einem Material gefertigt ist.

Es ist von Vorteil, wenn zumindest ein endständiger Abschnitt einer der beiden Stifthülsen eine zylindrische und/oder konische Mantelfläche aufweist mit einem Durchmesser und dass sich der endständige Abschnitt über eine Länge erstreckt, wobei das Verhältnis größer oder gleich fünf, vorzugsweise größer oder gleich sieben, ist. Im Fall einer konischen Mantelfläche ermittelt sich der Durchmesser durch eine Mittelung.

Die Länge des endständigen Abschnitts kann vorteilhaft zumindest 2 mm, vorzugsweise 3-10 mm betragen.

Die Gesamtlänge einer Stifthülse kann vorzugsweise zumindest 10 mm betragen.

Das Sensorgehäuse des erfindungsgemäßen Durchflussmessgerätes kann vorteilhaft mittels eines generativen Fertigungsverfahrens, vorzugsweise mittels eines Strahlschmelzverfahrens hergestellt werden. Zwar sind entsprechende Sensorgehäuse auch über andere Fertigungsverfahren, so z.B. durch Urformverfahren, insbesondere durch das Metal Injection Molding realisierbar, allerdings hat sich gezeigt, dass besonders gute Fertigungstoleranzen und besonders dünnwandige Bauteile mit den vorgenannten bevorzugten Fertigungsverfahren erreichbar sind.

Nachfolgend wird die Erfindung anhand eines Ausführungsbeispiels und unter Zuhilfenahme der beigefügten Zeichnungen näher erläutert. Diese Beschreibung und die Figuren sind exemplarisch zu verstehen und in keinster Weise einschränkend für den Schutzbereich der vorliegenden Erfindung. Es zeigen:
- Fig. 1: Seitenansicht einer ersten Ausführungsvariante eines Sensorgehäuses eines erfindungsgemäßen thermischen Durchflussmessgeräts;
- Fig. 2: Schnittansicht des Sensorgehäuses der Fig. 1;

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder Prongs oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Im Bereich der thermischen Durchflussmessung wird das aktive Sensorelement auch oft Heizer genannt. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung. Die Heizleistung kann durch einen sogenannten Leistungskoeffizienten PC beschrieben werden.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder't-mass' angeboten und vertrieben.

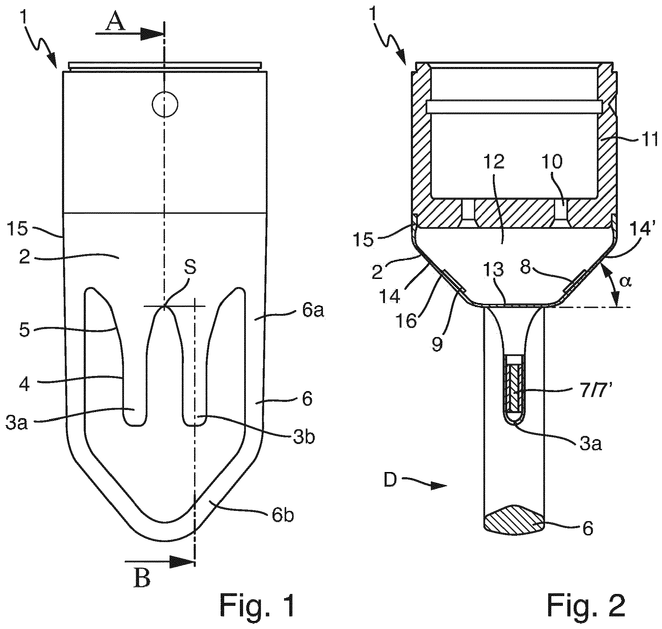

In Fig. 1 ist eine besondere Variante eines thermischen Durchflussmessgerätes näher dargestellt. Dabei erkennt man insbesondere das Gehäuse eines Messaufnehmers eines thermischen Durchflussmessgerätes, welches nachfolgend als Sensorgehäuse 1 bezeichnet wird. Dieses Gehäuse ist vorzugsweise aus Metall gefertigt und kann als Einstecksensor ausgebildet sein oder fest, ggf. mit einem Zwischenstück, an der Innenwandung eines Messrohres festgelegt sein.

Zusätzlich zum Messaufnehmer weist das thermische Durchflussmessgerät selbstverständlich auch eine Auswerteeinheit auf, welche jedoch aus Gründen der Übersichtlichkeit nicht näher dargestellt ist.

Das nachfolgend beschriebene Sensorgehäuse 1 eines Messaufnehmers stellt lediglich eine besonders bevorzugte Ausführungsvariante der Erfindung dar und ist keineswegs beschränkend für den Schutzumfang der vorliegenden Erfindung zu verstehen.

Das Sensorgehäuse 1 weist eine Kappe 2 auf welche auf einen metallischen Hohlkörper 11 aufgesetzt und mit diesem verbunden ist. Die Kappe 2 weist eine Mantelfläche 15 und eine Stirnfläche 16 auf. Aus der Stirnfläche 16 stehen zumindest zwei Stifthülsen 3a, und 3b hervor, welche der Kappe 2 zugeordnet sind.

Der Hohlkörper weist Löcher 10 als Kabeldurchführungen auf. Die Gesamtheit aus der Kappe 2 mit den Stifthülsen 3a, 3b und einer angrenzenden Fläche des Hohlkörpers 12 definiert, abgesehen von den vorgenannten Löchern 10, einen Hohlraum 12. Die Kappe 2 kann auf den Hohlkörper 11 aufgesetzt und mit diesem verbunden sein. Dies kann z.B. durch Verschweißen oder besonders bevorzugt durch Fügen und Umformen erfolgen.

Die Stirnfläche 16 teilt sich in eine plattenförmige Grundfläche 13, welche in Fig. 2 als ebene Fläche dargestellt ist, und in zumindest eine, vorzugsweise jedoch zwei, geneigte Flächen 14, 14' auf. Die Grundfläche kann allerdings auch gebogen sein. Das Sensorgehäuse 1 weist eine Längsachse A auf. Das Sensorgehäuse ist vorzugsweise spiegelsymmetrisch entlang zweier Symmetrieebenen ausgebildet, wobei die beiden Symmetrieebenen senkrecht zueinander stehen und die Längsachse des Sensorgehäuses die Schnittgerade der beiden Ebenen bildet.

Die zumindest zwei Stifthülsen 3a und 3b weisen jeweils Längsachsen B auf, welche parallel zur Längsachse A verlaufen und aus der Stirnfläche 16, insbesondere der Grundfläche 13, der Kappe 2 hervorstehen. Jede der Stifthülsen 3a, 3b weist endständig eine Stirnfläche auf.

Die geometrische Ausgestaltung einer jeweiligen Stifthülse 3a oder 3b ist dergestalt, dass ausgehend von der Stirnfläche zunächst ein erster Abschnitt 4 mit zylindrischer Stifthülsenwandung und einem ersten kontinuierlichen Zylindermanteldurchmesser d1 folgt. Sodann geht die Stifthülse in einem Übergangsbereich in einen zweiten Abschnitt 5 über, welcher kegelstumpfförmig ausgebildet ist und bei welchem der Durchmesser d allmählich im Verlauf des Kegelstumpfs bis zur Grundfläche 13 allmählich anwächst. Die Stifthülsen 3a und 3b weisen eine Länge I1 von zumindest 10 mm aufweisen.

Die Ausführungsvariante mit den gestuften Stifthülsen 3a und 3b ermöglicht ein besseres Einführen und Positionieren eines Heizelements und/oder eines Temperatursensors in der Stifthülse durch die endständige Öffnung auf der mediumsabgewandten Seite der Stifthülse.

In dem ersten Abschnitt 4 einer ersten der beiden Stifthülsen 3a und 3b ist ein Heizer 7 angeordnet. Dies kann z.B. auch ein beheizbares Widerstands-thermometer sein. Der Heizer 7 muss nicht zwingend an der Stirnfläche oder Zylindermantelfläche der Stifthülse anliegen, sondern kann vorzugsweise über eine Kupferbrücke mit der Wandung der Stifthülse thermisch gekoppelt sein. Gleiches gilt auch für die weiteren optionalen Stifthülsen. Eine entsprechende Anordnung und deren Vorteile sind in der DE 10 2008 015 359 A1 im Detail beschrieben.

Im ersten Abschnitt 4 der zweiten der beiden Stifthülsen 3a und 3b ist Temperatursensor 7' zur Ermittlung der Mediumstemperatur angeordnet. Dieser kann ebenfalls als beheizbares Widerstandsthermometer ausgebildet sein, wobei im Betrieb des thermischen Durchflussmessgerätes vorzugsweise jeweils eines der Widerstandsthermometer aktiv beheizt und eines der Widerstandsthermometer unbeheizt betrieben werden kann. Somit können der Heizer 7 und der Temperatursensor 7' konstruktiv identisch ausgebildet und in der jeweiligen Stifthülse angeordnet sein.

Die Wandstärke der Stifthülsen 3a und 3b beträgt zumindest im Abschnitt 4 weniger als 0,5 mm, vorzugsweise weniger oder gleich als 0,4 mm, insbesondere 0,1 bis 0,4 mm. Aufgrund der dünnen Wandstärke kann ein besonders günstiger Wärmeübergang erreicht werden.

Die Länge I2 dieses Abschnitts 8a kann zumindest 2 mm, vorzugsweise jedoch 3-10 mm betragen.

Das Verhältnis der Länge I2 zum Durchmesser d1 ist für den ersten Abschnitt 8a vorzugsweise größer als 5, besonders bevorzugt gleich oder größer als 7.

In einer bevorzugten Ausführungsvariante der Erfindung beträgt das durchschnittliche Verhältnis d_{Mitteiwert}/ I1I1/d_{Mittelwert} für die gesamte Stifthülse vorzugsweise größer als 4, wobei sich der Durchmesser immer auf die jeweilige Länge des Abschnitts der Stifthülse bezieht, in welchem der Durchmesser tatsächlich vorhanden ist. Im Falle eines Kegelstumpfes, wie in Abschnitt 5, kann eine Mittelwertbildung der Durchmesser erfolgen.

Das Gehäuse 1 kann vorzugsweise vollständig aus Metall gefertigt sein. Alternativ kann auch nur die Kappe mit den Stifthülsen aus Metall gefertigt sein. Als besonders bevorzugtes Metall kann Stahl genutzt werden. Alternativ kann, z.B. für stark-korrosive Medien, auch Titan oder Hastelloy als Wandungsmaterial genutzt werden.

Zusätzlich kann das Gehäuse sodann noch mit einer metallischen Außenbeschichtung versehen werden, um ggf. die Widerstandsfähigkeit gegenüber bestimmten Medien zu erhöhen. Diese Außenbeschichtung zählt gemäß der vorliegenden Erfindung jedoch nicht zum Gehäuse 2 sondern als zusätzlich auf das Gehäuse aufgebrachte Materiallage.

In einer Anordnung des thermischen Durchflussmessgerätes in einem Rohr z.B. in einer Prozessanlage ragen die erste und die zweite Stifthülsen 3a und 3b in das Lumen, also das Innere des Rohres, beispielsweise des Messrohres, hinein.

Der Hohlkörper 11 ist in der Ausführungsvariante der Fig. 1 und 2 zylindrisch dargestellt. Er kann allerdings auch eine andere Form, z.B. kegelstumpfförmig oder pyramidenstumpfförmig, aufweisen.

Die Kappe weist im Schnittbild der Fig. 2 die zwei ebenen Flächen 14 auf. In der DE 10 2013 108 099 A1 wird die Kontur einer entsprechenden Kappe jedoch ohne Stifthülsen im Detail beschrieben.

Alternativ zu dem Ausführungsbeispiel der DE 10 2013 108 099 A1 kann eine entsprechende Kappe auch zylindrisch ausgebildet sein und randseitig die zwei ebenen Flächen 14 aufweisen, welche durch Umformverfahren, wie z.B. durch Prägen, aus dem Material der Kappe herausgeformt sein können.

Alle Ausführungsbeispiele weisen eine erste Verbindungsache zwischen den Stifthülsen 3a und 3b, respektive zwischen deren Längsachsen B, auf. Die Längsachsen definieren eine Schnittebene S, welche senkrecht zu diesen Längsachsen angeordnet ist. Auf dieser Schnittebene S wird das thermische Durchflussmessgerät bei dessen Anordnung in einem Rohr von einem Messmediium in einem Winkel von 80-100°, insbesondere 83-97° angeströmt. Idealerweise liegt die Strömungsrichtung jedoch bei 90° zur ersten Verbindungsachse.

Die beiden ebenen Flächen weisen jeweils einen geometrischen Schwerpunkt, respektive einen Flächenschwerpunkt auf. Eine zweite Verbindungsachse wird durch diesem Flächenschwerpunkt einer Fläche 14 und dem Mittelpunkt zwischen den Längsachsen der beiden Stifthülsen auf Verbindungsachse definiert. Diese zweite Verbindungsachse ist vorzugsweise im Winkel von 90° zu der ersten Verbindungsachse auf der besagten Schnittebene S abgeordnet. In Verlängerung der zweiten Verbindungsachse kann vorzugsweise auch der Flächenschwerpunkt der zweiten Fläche 14 angeordnet sein.

Die beiden Flächen 14 werden durch die Außenkontur der Wandung der Kappe 2 definiert. Bevorzugt weist die Wandung der Kappe eine Wandstärke von weniger als 0,5 mm auf. Die Wandstärkendifferenz zwischen den einzelnen Abschnitten der Kappe kann vorzugsweise weniger als 0,1 mm betragen.

Entlang der Innenkontur der Flächen ist vorzugsweise zumindest ein Heizer 8 oder 9, z.B. in Form eines beheizbaren Widerstandsthermometers, angeordnet. In einer besonders bevorzugten Ausführungsvariante der Erfindung, welche auch in Fig. 2 dargestellt ist, sind an jeder der beiden Flächen 14 ein Heizer 8, 9 angeordnet, also ein erster Heizer 8 und ein zweiter Heizer 9.

Anstelle von zwei Flächen, kann auch lediglich eine Fläche 14 mit einem Heizer vorgesehen sein, welche im eingebauten Zustand in oder entgegen der Strömungsrichtung D angeordnet ist.

Um eine optimale Anströmgeometrie zu erreichen, ist die Fläche 14 bzw. sind die Flächen 14 gegenüber der Schnittebene S in einem Winkel α von vorzugsweise mehr als 5°, besonders bevorzugt 10°-70° und ganz besonders bevorzugt 35-55°, geneigt. Die Neigung erfolgt senkrecht zur Schnittebene S.

In Fig. 2 ist schematisch eine Strömung des Messmediums aus einer Strömungsrichtung D dargestellt, welche auf das Sensorgehäuse 1 trifft. Durch die Neigung der Flächen wird auf der angeströmten ersten Fläche 14 eine eng anliegende sogenannte Grenzschicht des Messmediums erzeugt.

Auf der von der Strömung abgeneigten zweiten Fläche 14' wird ein sogenannter Rezirkulationsbereich und ggf. bei schnellen Strömungsgeschwindigkeiten sogar ein Strömungsabriss gebildet. Dies geht mit einem unterschiedlich starken Wärmeabtransport der Wärme einher, so dass durch die an den Flächen 14 angeordneten Heizer 8 und 9 einen unterschiedlichen Leistungsverbrauch bzw. einen unterschiedlichen Leistungskoeffizienten aufweisen. Weiterhin wird durch die anströmseitige geneigte Fläche ein Staupunkt vorgegeben.

Durch die gezielte Vorgabe von Rezirkulationsbereiche und Grenzschichten wird die Strömung entlang der Heizoberfläche speziell ausgebildet.

Das allgemeine Verfahren zur Strömungsrichtungserkennung ist in den Druckschriften DE 10 2009 045 956 A1 und DE 10 2010 040 285 A1 beschrieben.

Es erfolgt dabei die Ermittlung eines Entscheidungskoeffizienten DC auf Grundlage zweier Leistungskoeffizienten bzw. Powerkoeffizienten PC1 und PC2. Im vorliegenden Fall bezieht sich ein Leistungskoeffizient PC1 auf den Heizer in einer der Stifthülsen 3a oder 3b und ein zweiter Leistungskoeffizient auf den Heizer 8 oder 9 in der Kappe 2. Der Entscheidungskoeffizient ermittelt sich wie folgt DC= (PC2-PC1)/PC2. Durch Abgleich des Entscheidungskoeffizienten mit einem Grenzwert kann sodann entschieden werden, von welcher Richtung die Strömung D durch ein Rohr bzw. Messrohr fließt. Es ist klar, dass der Leistungskoeffizient des Heizers 8 oder 9 in der Kappe sich ändern wird, je nachdem aus welcher Strömungsrichtung der Sensor angeströmt wird. Für die Richtungserkennung werden vorzugsweise zumindest zwei Heizer 8 und 9 in der Kappe angeordnet.

Es ist verständlich, dass die geneigten Flächen 14, 14' mit den Heizern 8 und 9 auch einen anderen Anschmutzungsgrad als die Stifthülsen 3a und 3b aufweisen. Daher kann auch durch Verhältnisbildung z.B. der Leistungskoeffizienten des Heizers in der ersten oder zweiten Stifthülse 3a, 3b mit einem Heizer 8 oder 9 der Kappe 2 eine Einschätzung des Sensordrifts über die Betriebszeit des thermischen Durchflussmessgerätes getroffen werden. Ggf. kann eine Quantifizierung des Sensordrifts erfolgen und besonders bevorzugt Kompensation des Sensordrifts bei der Durchflussmessung erfolgen. Für die Anzeige und ggf. Quantifizierung eines Sensordrifts kann ein Heizer 8 oder 9, welcher in der Kappe angeordnet ist, genügen.

Weiterhin weist das Gehäuse 1 einen Bügel 6 aufweisen, welcher die Anordnung der ersten und der zweiten Stifthülse 3a, 3b bogenförmig überspannt und mit der Kappe 2 vorzugsweise ebenfalls monolithisch und nahtfrei verbunden ist. Dieser Bügel dient vorzugsweise als strömungsführendes Element und verringert die Drehwinkelempfindlichkeit des Sensors. Er umfasst zwei längliche Segmente 6a, welche parallel zu den Längsachsen B der Stifthülsen aus der Kappe 2 hervorstehen. Weiterhin weist der Bügel ein Verbindungselement 6b auf, welches die beiden länglichen Elemente verbindet und eine Vibration dieser Elemente zumindest vermindert.

Ein monolithisches Sensorgehäuse mit zumindest zwei entsprechend langen dünnwandigen Stifthülsen ist zudem eine fertigungstechnische Herausforderung. Mittels Feinguss sind entsprechende Strukturen in kosten- und zeitintensiver Weise fertigbar. Die verwendeten Metallmaterialien müssen zudem auch für den Guss geeigneten sein. Für einen gelungenen Feinguss müssen u.a. viele Aspekte wie die Abkühlungsgeschwindigkeit und ggf. Nachbearbeitungsschritte zur Oberflächenbearbeitung beachtet werden. Ähnliche Nachteile treten auch bei Urformverfahren, z.B. dem sogenannten Metal Injection Molding auf, welches grundsätzlich auch im Rahmen der Erfindung zur Herstellung des Sensorgehäuses genutzt werden kann. Der besondere Vorteil des MIM-Verfahrens ist eine vergleichsweise hohe Fertigungsgeschwindigkeit.

Besonders bevorzugt sind generative Fertigungsverfahren, wie Strahlschmelzverfahren. wie z.B. das selektives Laserschmelzen, welches auch als SLM-Verfahren bekannt ist, um einen derartigen Gegenstand mit entsprechend-dünner Wandstärke und entsprechender Länge der Stifthülsen zu fertigen.

Beim SLM-Verfahren kann ein Metallpulver in einer dünnen Schicht auf eine Oberfläche aufgebracht werden. Das Metallpulver wird sodann durch Laserstrahlung lokal vollständig geschmolzen und erstarrt zu einer festen Materialschicht in einer Schichtdicke von typischerweise 15-150 µm. Sodann wird die Oberfläche um den Betrag der Schichtdicke abgesenkt und eine neue Materialschicht aufgetragen. Auf diese Weise bildet sich allmählich das Gehäuse 1 des Messaufnehmers heraus. Materialspannungen und korrosionsanfällige Nahtstellen sind dabei nicht vorhanden.

Besonders bevorzugt kann die Kappe in einem Strahlschmelzverfahren hergestellt werden. Die geneigten Flächen 14 und 14' sind für eine Oberflächennachbearbeitung, so z.B. Polieren, gut erreichbar. Daher können fertigungsbedingte Oberflächenrauhigkeiten bei der vorliegenden Ausführungsvariante durch eine entsprechende Oberflächennachbearbeitung vorteilhaft verringert werden.

### Bezugszeichenliste

- 1: Sensorgehäuse
- 2: Kappe
- 3a, 3b: erste und zweite Stifthülse
- 4: erster Abschnitt
- 5: zweiter Abschnitt
- 6: Bügel
- 6a: Segment
- 6b: Verbindungselement
- 7/7': Heizer / Temperatursensor zur Ermittlung der Mediumstemperatur
- 8: Heizer
- 9: Heizer
- 10: Löcher
- 11: Hohlkörper
- 12: Hohlraum
- 13: Grundfläche
- 14, 14': geneigte Fläche

- A: Längsachse des Sensorgehäuses
- B: Längsachse einer Stifthülse
- D: Strömungsrichtung
- S: Schnittebene

- α: Neigungswinkel

## Patentansprüche

1. Thermisches Durchflussmessgerät umfassend einen Sensor mit einem Sensorgehäuse (1), welches eine metallische Kappe (2) mit einer Mantelfläche (15) und einer Stirnfläche (16) aufweist,
wobei das Sensorgehäuse (1) zumindest eine erste und eine zweite Stifthülse (3a, 3b) aufweist, welche ausgehend von der Stirnfläche (16) hervorstehen, wobei das Sensorgehäuse (1) in einer ersten der beiden Stifthülsen (3a oder 3b) einen ersten Heizer (7) aufweist und in einer zweiten der beiden Stifthülsen (3a oder 3b) einen Temperatursensor (7') zur Ermittlung einer Mediumstemperatur aufweist;
**dadurch gekennzeichnet, dass** die Stirnfläche (16) der Kappe (2) zumindest in eine Grundfläche (13) und in zumindest eine erste gegenüber dieser Grundfläche um einen Winkel (α) geneigte ebene Fläche (14, 14') unterteilt ist, wobei an einer Innenwandung der Kappe (2) im Bereich dieser ersten Fläche (14, 14') ein zweiter Heizer (8, 9) angeordnet ist.

2. Thermisches Durchflussmessgerät nach Anspruch 1, **dadurch gekennzeichnet, dass** die Stirnfläche (16) der Kappe (2) zumindest eine zweite gegenüber dieser Grundfläche um einen Winkel (α) geneigte ebene Fläche (14,14') unterteilt ist, wobei an einer Innenwandung der Kappe (2) im Bereich dieser zweiten Fläche (14, 14') ein dritter Heizer (8, 9) angeordnet ist.

3. Thermisches Durchflussmessgerät nach Anspruch 1 oder 2, **dadurch gekennzeichnet, dass** das Sensorgehäuse (1) eine Längsachse (A) aufweist und eine erste Schnittebene, auf welcher diese Längsachse (A) angeordnet ist, aufweist, wobei die Kappe spiegelsymmetrisch aufgebaut ist mit einer ersten Symmetrieebene, welche deckungsgleich zur ersten Schnittebene ist.

4. Thermisches Durchflussmessgerät nach Anspruch 1 oder 2, **dadurch gekennzeichnet, dass** das Sensorgehäuse (1) eine zweite Schnittebene, auf welcher diese Längsachse (A) angeordnet ist, aufweist, wobei die Kappe spiegelsymmetrisch aufgebaut ist mit einer zweiten Symmetrieebene, welche deckungsgleich zur zweiten Schnittebene ist, wobei vorzugsweise die erste und die zweite Schnittebenen senkrecht zueinander angeordnet sind.

5. Thermisches Durchflussmessgerät nach einem der vorhergehenden Ansprüche, **dadurch gekennzeichnet, dass** das Sensorgehäuse (1) eine Schnittebene (S) aufweist, welche senkrecht zur Längsachse (A) des Sensorgehäuses (1) angeordnet ist, wobei der Winkel (α) vorzugsweise mehr als 5°, besonders bevorzugt 10°-70°, ganz besonders bevorzugt 35-55°, zu dieser Schnittebene (S) geneigt ist.

6. Thermisches Durchflussmessgerät nach einem der vorhergehenden Ansprüche, **dadurch gekennzeichnet, dass** die Kappe (2) zumindest im Bereich der ersten und/oder der zweiten Fläche (14, 14') eine Wandstärke von weniger als 0,5 mm aufweist.

7. Thermisches Durchflussmessgerät nach einem der vorhergehenden Ansprüche, **dadurch gekennzeichnet, dass** die erste und die zweite Stifthülse (3a, 3b) Teil der Kappe (2) sind, wobei die Kappe (2) als monolithisches Bauteil ausgebildet ist.

8. Thermisches Durchflussmessgerät nach einem der vorhergehenden Ansprüche, **dadurch gekennzeichnet, dass** die Wandstärkendifferenz zwischen den einzelnen Abschnitten der Kappe (2) weniger als 0,1 mm beträgt.

9. Thermisches Durchflussmessgerät nach einem der vorhergehenden Ansprüche, **dadurch gekennzeichnet, dass** das thermische Durchflussmessgerät eine Auswerteeinheit aufweist, welche ausgerüstet ist zur Erkennung eines Sensordrifts anhand von an dem zweiten und/oder dritten Heizer (8, 9) ermittelten leistungsproportionalen Messwerten.

10. Thermisches Durchflussmessgerät nach einem der vorhergehenden Ansprüche, **dadurch gekennzeichnet, dass** das thermische Durchflussmessgerät eine Auswerteeinheit aufweist, welche ausgerüstet ist zur Richtungserkennung der Strömung eines Mediums, anhand von an dem zweiten und dritten Heizer (8, 9) ermittelten leistungsproportionalen Messwerten.

11. Verfahren zur Herstellung einer Kappe (2) eines thermischen Durchflussmessgerätes gemäß Anspruch 1, **dadurch gekennzeichnet, dass** die Kappe (2) in einem generativen Fertigungsverfahren, insbesondere einem Strahlschmelzverfahren hergestellt wird.

## Claims

1. Thermal flowmeter comprising a sensor with a sensor housing (1), which has a metal cap (2) with a lateral surface (15) and a front face (16), wherein the sensor housing (1) has at least a first and a second contact sleeve (3a, 3b) which project out of the front face (16), wherein the sensor housing (1) has a first heater (7) in a first of the two contact sleeves (3a or 3b) and a temperature sensor (7'), which is designed to determine a temperature of the medium, in a second of the two contact sleeves (3a or 3b);
**characterized in that** the front face (16) of the cap (2) is subdivided at least into a base area (13) and into at least a first planar surface (14, 14') inclined at an angle (σ) in relation to said base area, wherein a second heater (8, 9) is arranged on an interior wall of the cap (2) in the area of said first surface (14, 14').

2. Thermal flowmeter as claimed in Claim 1, **characterized in that** the front face (16) of the cap (2) is subdivided into at least a second planar surface (14, 14') inclined at an angle (σ) in relation to said base area, wherein a third heater (8, 9) is arranged on an interior wall of the cap (2) in the area of said second surface (14, 14').

3. Thermal flowmeter as claimed in Claim 1 or 2, **characterized in that** the sensor housing (1) has a longitudinal axis (A) and a first sectional plane on which this longitudinal axis (A) is arranged, wherein the cap has a mirror-image symmetrical design with a first symmetrical plane which coincides with the first sectional plane.

4. Thermal flowmeter as claimed in Claim 1 or 2, **characterized in that** the sensor housing (1) has a second sectional plane on which said longitudinal axis (A) is arranged, wherein the cap has a mirror-image symmetrical design with a second sectional plane, which coincides with the first sectional plane, wherein the first and the second sectional plane are preferably arranged perpendicularly to one another.

5. Thermal flowmeter as claimed in one of the previous claims, **characterized in that** the sensor housing (1) has a sectional plane (S) which is perpendicular to the longitudinal axis (A) of the sensor housing (1), wherein the angle (σ) is inclined in relation to said sectional plane (S) by an angel preferably greater than 5°, particularly preferably 10° to 70°, most preferably 35° to 55°.

6. Thermal flowmeter as claimed in one of the previous claims, **characterized in that** the cap (2) has a wall thickness of less than 0.5 mm at least in the area of the first and/or second surface (14, 14').

7. Thermal flowmeter as claimed in one of the previous claims, **characterized in that** the first and the second contact sleeve (3a, 3b) are part of the cap (2), wherein the cap (2) is designed as a monolithic component.

8. Thermal flowmeter as claimed in one of the previous claims, **characterized in that** the difference in wall thickness between the individual parts of the cap (2) is less than 0.1 mm.

9. Thermal flowmeter as claimed in one of the previous claims, **characterized in that** the thermal flowmeter has an evaluation unit that is equipped to detect a sensor drift on the basis of measured values that are proportional to the determined power and determined at the second and/or third heater (8, 9).

10. Thermal flowmeter as claimed in one of the previous claims, **characterized in that** the thermal flowmeter comprises an evaluation unit that is equipped to determine the direction of flow of a medium using measured values that are proportional to the power and determined at the second and third heater (8, 9).

11. Procedure designed to manufacture a cap (2) of a thermal flowmeter as claimed in Claim 1, **characterized in that** the cap (2) is made in a generative manufacturing process, particularly a beam melting process.

## Revendications

1. Débitmètre thermique comprenant un capteur avec un boîtier de capteur (1), lequel présente un capuchon (2) métallique avec une surface extérieure (15) et une surface frontale (16), le boîtier de capteur (1) présentant au moins une première et une deuxième douille de contact (3a, 3b) qui font saillie de la surface frontale (16), le boîtier de capteur (1) présentant un premier élément chauffant (7) dans une première des deux douilles de contact (3a ou 3b) et un capteur de température (7'), destiné à la détermination d'une température du produit, dans une deuxième des deux douilles de contact (3a ou 3b) ; **caractérisé en ce que** la face frontale (16) du capuchon (2) est subdivisée au moins en une surface de base (13) et au moins une première surface plane (14, 14') inclinée d'un angle (σ) par rapport à cette surface de base, un deuxième élément chauffant (8, 9) étant disposé sur une paroi intérieure du capuchon (2) dans la zone de cette première surface (14, 14').

2. Débitmètre thermique selon la revendication 1, **caractérisé en ce que** la face frontale (16) du capuchon (2) est subdivisée en au moins une deuxième surface plane (14, 14') inclinée d'un angle (σ) par rapport à cette surface de base, un troisième élément chauffant (8, 9) étant disposé sur une paroi intérieure du capuchon (2) dans la zone de cette deuxième surface (14, 14').

3. Débitmètre thermique selon la revendication 1 ou 2, **caractérisé en ce que** le boîtier de capteur (1) présente un axe longitudinal (A) et un premier plan de coupe sur lequel est disposé cet axe longitudinal (A), le capuchon étant de construction symétrique avec un premier plan de symétrie qui coïncide avec le premier plan de coupe.

4. Débitmètre thermique selon la revendication 1 ou 2, **caractérisé en ce que** le boîtier de capteur (1) présente un deuxième plan de coupe sur lequel est disposé ledit axe longitudinal (A), le capuchon étant de construction symétrique avec un deuxième plan de symétrie qui coïncide avec le deuxième plan de coupe, le premier et le deuxième plan de coupe étant de préférence disposés perpendiculairement l'un à l'autre.

5. Débitmètre thermique selon l'une des revendications précédentes, **caractérisé en ce que** le boîtier de capteur (1) présente un plan de coupe (S) disposé perpendiculairement à l'axe longitudinal (A) du boîtier de capteur (1), l'angle (σ) étant de préférence supérieur à 5°, particulièrement de préférence de 10° à 70°, plus particulièrement de préférence de 35° à 55°, incliné par rapport audit plan de coupe (S).

6. Débitmètre thermique selon l'une des revendications précédentes, **caractérisé en ce que** le capuchon (2) présente une épaisseur de paroi inférieure à 0,5 mm au moins au niveau de la première et/ou de la deuxième face (14, 14).

7. Débitmètre thermique selon l'une des revendications précédentes, **caractérisé en ce que** la première et la deuxième douille de contact (3a, 3b) font partie du capuchon (2), le capuchon (2) étant formé comme un composant monolithique.

8. Débitmètre thermique selon l'une des revendications précédentes, **caractérisé en ce que** la différence d'épaisseur de paroi entre les parties individuelles du capuchon (2) est inférieure à 0,1 mm.

9. Débitmètre thermique selon l'une des revendications précédentes, **caractérisé en ce que** le débitmètre thermique comprend une unité d'exploitation qui est équipée pour détecter une dérive du capteur sur la base de valeurs mesurées proportionnelles à la puissance déterminées au niveau du deuxième et/ou du troisième élément chauffant (8, 9).

10. Débitmètre thermique selon l'une des revendications précédentes, **caractérisé en ce que** le débitmètre thermique comprend une unité d'exploitation qui est équipée pour la détection directionnelle de l'écoulement d'un fluide, sur la base de valeurs mesurées proportionnelles à la puissance déterminées au niveau du deuxième et du troisième élément chauffant (8, 9).

11. Procédé destiné à la fabrication d'un capuchon (2) d'un débitmètre thermique selon la revendication 1, **caractérisé en ce que** le capuchon (2) est fabriqué dans un procédé de fabrication générative, notamment un procédé de fusion par laser.
